# EUROPEAN PATENT APPLICATION

(11) **EP 4 832 164 A1**
(43) Date of publication of application: **28.10.2026**
(21) Application number: 24926674.3
(22) Date of filing: 28.08.2024
(51) Int. Cl.: H01M 10/613

(54) **BATTERY MODULE, BATTERY AND ELECTRICAL DEVICE**

(30) Priority: 26.02.2024 CN 202420353973 U
(71) Applicant: Contemporary Amperex Technology Co., Limited, Ningde, Fujian 352100 (CN)
(72) Inventor: CAO, Shanshan, Ningde, Fujian 352100 (CN); TANG, Yu, Ningde, Fujian 352100 (CN); HUANG, Xiaoteng, Ningde, Fujian 352100 (CN); WANG, Wenli, Ningde, Fujian 352100 (CN); YANG, Haiqi, Ningde, Fujian 352100 (CN)
(74) Representative: Ran, Handong
(86) International application number: PCT/CN2024/115251
(87) International publication number: WO 2025/179807

(57) **Abstract**

The present application relates to a battery module, a battery and an electronical device. The battery module (20) comprises battery cells (21), cooling plates (22), and protective members (24). The battery cells (21) are arranged in intervals in a first direction (X); and each cooling plate (22) is arranged between two adjacent batteries (21) in the first direction (X), the two adjacent battery cells (21) and at least one side of the periphery of the cooling plate (22) located therebetween can jointly define an accommodating space (23), and the protective member (24) covers at least the at least one side of the cooling plate (22) that defines the accommodating space (23). When thermal runaway occurs to a battery cell (21), the protective member (24) can prevent a gas, particles, etc., generated during thermal runaway of the battery cell (21) from entering the accommodating space (23) and acting on the cooing plate (22), thereby reducing the probability of damage to or even failure of the cooling plate (22), and thus the cooling plate (22) can be effectively protected. In addition, the protective members (24) can also protect the cooling plates (22) during the assembly of the battery module (20), and reduce the probability of impurities such as particles entering the accommodating space (23) and damaging the cooling plates (22), resulting in the damage to or even failure of the cooling plates (22).

## Description

### CROSS-REFERENCE TO RELATED APPLICATIONS

The present application claims priority to Chinese Patent Application No. 202420353973.2, filed with the China National Intellectual Property Administration on February 26, 2024 and entitled "BATTERY MODULE, BATTERY, AND ELECTRICAL DEVICE", which is incorporated herein by reference in its entirety.

### TECHNICAL FIELD

The present application relates to the field of batteries, and in particular, to a battery module, a battery, and an electrical device.

### BACKGROUND

Cooling plates in battery modules are used to cool battery cells. To achieve large-area cooling of the battery cells, one cooling plate is generally used to simultaneously cool one side of a plurality of battery cells. During manufacturing and processing, particles easily enter between two neighboring battery cells, causing damage to the cooling plate or the battery cells.

### SUMMARY

In view of the foregoing problems, the present application provides a battery module, a battery, and an electrical device.

According to a first aspect, the present application provides a battery module. The battery module includes battery cells, a cooling plate, and a protective member. The battery cells are arranged at intervals along a first direction. The cooling plate is arranged between two neighboring battery cells along the first direction. The two neighboring battery cells and at least one side of an outer periphery of the cooling plate located between the two neighboring battery cells jointly form an accommodating space. The protective member at least covers the at least one side of the cooling plate that forms the accommodating space.

In the technical solutions of embodiments of the present application, since the protective member can prevent the cooling plate from directly contacting an external environment through the accommodating space, when the battery cell undergoes thermal runaway, the protective member can block gases or particles generated during the thermal runaway of the battery cell, and reduce a probability that the gases or particles enter the accommodating space to affect the cooling plate and cause damage or even failure of the cooling plate, thereby effectively protecting the cooling plate.

In addition, during assembly of the battery module, the protective member can also protect the cooling plate, to reduce a probability that the particles or other impurities enter the accommodating space and cause damage or even failure of the cooling plate.

In some embodiments, the accommodating space is formed with an opening on a side thereof away from the cooling plate. The protective member covers the opening.

The protective member is used to cover the opening, so that a path of the particles entering the accommodating space can be blocked. In addition, compared to protecting the entire cooling plate, the protective member is only set to cover the opening, so that a quantity of used protective members can be reduced, thereby lowering production costs of the battery module.

In some embodiments, the protective member includes a protective film, the protective film is arranged over the opening, and the protective film covers the opening.

This arrangement enriches types of components that the protective member can include, simplifies a difficulty of manufacturing the protective member, and expands an applicable environment of the protective member.

In some embodiments, the protective member includes a protective plate, two opposite ends of the protective plate are respectively connected to end surfaces of the two neighboring battery cells, and the protective plate covers the opening.

This arrangement enriches types of components that the protective member can include, simplifies a difficulty of manufacturing the protective member, and expands an applicable environment of the protective member.

In some embodiments, the protective member includes a high temperature resistant member.

When the protective member is the high temperature resistant member, if the battery cell undergoes the thermal runaway, when a large amount of heat generated by the battery cell is transferred to a vicinity of the cooling plate, the protective member can effectively block the heat and reduce a probability that the cooling plate leaks under an action of a high temperature due to direct contact with the large amount of heat.

In some embodiments, the protective member includes foam.

When the protective member is made of the foam, since the foam has excellent sealing properties and resistance to compression deformation, and is suitable for various temperature environments, not only the probability that the particles and other impurities pass through the protective member and enter the accommodating space can be reduced, but also a service life of the protective member can be extended.

In some embodiments, the protective member includes a first portion and a second portion, the first portion is connected to the battery cell, the second portion covers the opening of the accommodating space, and a strength of the second portion is greater than a strength of the first portion.

The strength of the second portion is set to be greater than the strength of the first portion, so that not only a use range of the second portion can be increased, but also a service life of the second portion can be extended.

In some embodiments, the protective member is inserted into the accommodating space, and the protective member is in contact with the cooling plate.

In this way, while protecting the cooling plate, the protective member occupies less space in the battery module, thereby reducing an overall volume of the battery module.

In some embodiments, the protective member includes a first end and a second end that are arranged opposite to each other, the first end is in contact with the cooling plate, a distance between the second end and the cooling plate is defined as L, and 0 mm < L < 3 mm.

In this way, a thickness of the protective member can be reduced as much as possible without affecting a function of the protective member, and a probability that the protective member does not interfere with other components in the battery module can be reduced.

In some embodiments, the protective member includes an insulating adhesive.

This arrangement can not only reduce a difficulty of obtaining the protective member, but also improve a connection stability between the protective member and the accommodating space, thereby improving a protective effect of the protective member on the cooling plate.

In some embodiments, the battery module further includes an electrical connection member, the electrical connection member is located on one side of the battery cell, and the electrical connection member is electrically connected to the two neighboring battery cells.

The protective member is located between the electrical connection member and the battery cell, and the protective member is spaced apart from the electrical connection member.

Since the protective member is arranged on a side on which the electrical connection member is located, and the protective member is made of an insulating material, an electrical clearance and a creepage distance in this case can be appropriately increased, thereby improving electrical safety.

According to a second aspect, the present application provides a battery. The battery includes the battery module according to the foregoing embodiments.

Since the protective member of the battery can prevent the cooling plate from directly contacting an external environment through the accommodating space, when the battery cell undergoes thermal runaway, the protective member can block gases or particles generated during the thermal runaway of the battery cell, and reduce a probability that the gases or particles enter the accommodating space to affect the cooling plate and cause damage or even failure of the cooling plate, thereby effectively protecting the cooling plate.

In addition, during assembly of the battery module, the protective member can also protect the cooling plate, to reduce a probability that the particles or other impurities enter the accommodating space and cause damage or even failure of the cooling plate.

According to a third aspect, the present application provides an electrical device. The electrical device includes the battery according to the foregoing embodiments.

Since the protective member of the electrical device can prevent the cooling plate from directly contacting an external environment through the accommodating space, when the battery cell undergoes thermal runaway, the protective member can block gases or particles generated during the thermal runaway of the battery cell, and reduce a probability that the gases or particles enter the accommodating space to affect the cooling plate and cause damage or even failure of the cooling plate, thereby effectively protecting the cooling plate.

In addition, during assembly of the battery module, the protective member can also protect the cooling plate, to reduce a probability that the particles or other impurities enter the accommodating space and cause damage or even failure of the cooling plate.

The foregoing description is merely an overview of the technical solutions of the present application. To understand the technical solutions of the present application more clearly, implementation can be performed according to content of the specification. Moreover, to make the foregoing and other objectives, features, and advantages of the present application more comprehensible, specific implementations of the present application are described below.

### BRIEF DESCRIPTION OF THE DRAWINGS

To describe the technical solutions in embodiments of the present application more clearly, the following briefly introduces the accompanying drawings to be used in the embodiments of the present application. Apparently, the accompanying drawings in the following descriptions show merely some embodiments of the present application, and a person of ordinary skill in the art may still derive other drawings from the accompanying drawings without creative efforts. In the accompanying drawings:
FIG. 1 is a schematic diagram of a structure of a vehicle according to one or more embodiments;
FIG. 2 is an exploded view of a battery according to one or more embodiments;
FIG. 3 is a schematic diagram of a disassembled structure of a battery cell according to one or more embodiments;
FIG. 4 is a schematic diagram of a structure of a battery module according to one or more embodiments;
FIG. 5 is an exploded view of a battery module according to one or more embodiments;
FIG. 6 is a cross-sectional view of a protective member of a battery module including a protective film according to one or more embodiments;
FIG. 7 is an enlarged schematic view of a position A in FIG. 6;
FIG. 8 is a cross-sectional view of a protective member of a battery module inserted into an accommodating space according to one or more embodiments; and
FIG. 9 is an enlarged schematic view of a position B in FIG. 8.

Reference numerals in the accompanying drawings of specific implementations are as follows:
1000: Vehicle;
100: Battery; 200: Controller; 300: Motor;
10: Box body; 11: First component; 12: Second component;
20: Battery module; 21: Battery cell; 211: End cover; 211a: Electrode terminal; 212: Housing; 213: Battery cell assembly; 22: Cooling plate; 23: Accommodating space; 24: Protective member; 25: Electrical connection member; X: First direction; Y: Second direction; and Z: Third direction.

### DETAILED DESCRIPTION

The technical solutions in embodiments of the present application are clearly and completely described below with reference to the accompanying drawings in the embodiments of the present application. Apparently, the described embodiments are merely some rather than all of the embodiments of the present application. All other embodiments obtained by a person of ordinary skill in the art based on the embodiments of the present application without inventive efforts shall fall within the protection scope of the present application.

Unless otherwise defined, meanings of all technical and scientific terms used in this specification are the same as those usually understood by a person skilled in the art to which the present application belongs. Terms used in this specification are merely intended to describe objectives of the specific embodiments, but are not intended to limit the present application. Terms "include", "have", and any transformation thereof in the specification, claims, and accompanying drawings of the present application are intended to cover non-exclusive inclusion.

In the descriptions of the embodiments of the present application, technical terms, such as "first", "second", and the like, are merely used to distinguish between different objects and should not be interpreted as indicating or implying relative importance, nor should be understood to implicitly specify a quantity, a particular sequence, or a primary-secondary relationship of indicated technical features. In the descriptions of the embodiments of the present application, "a plurality of" means two or more, unless otherwise definitely and specifically limited.

"Embodiment" mentioned in this specification means that particular features, structures, or characteristics described with reference to the embodiment may be included in at least one embodiment of the present application. The term appearing at different positions of this specification may not refer to the same embodiment or an independent or alternative embodiment that is mutually exclusive with another embodiment. A person skilled in the art explicitly or implicitly understands that the embodiments described in the specification may be combined with other embodiments.

In the descriptions of the embodiments of the present application, when appearing, the term "a plurality of" refers to two or more (including two).

In the descriptions of the embodiments of the present application, when appearing, orientation or position relationships indicated by technical terms such as "thickness", "upper", "bottom", "inner", and "outer" are based on the orientations or positional relationships shown in the accompanying drawings. These terms are used only for the convenience of describing the embodiments of the present application and simplifying the descriptions, rather than indicating or implying that the mentioned apparatus or component need to have a particular orientation or need to be constructed and operated in a particular orientation. Therefore, such terms should not be construed as limiting of the embodiments of the present application.

In the descriptions of the embodiments of the present application, unless otherwise explicitly specified and defined, when appearing, technical terms such as "mounted", "connected", "connection", and "fixed" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. A person of ordinary skill in the related art can understand specific meanings of the foregoing terms in the embodiments of the present application according to a specific situation.

Currently, from the perspective of development of market situations, power batteries are more widely applied. The power batteries are not only used in energy storage systems such as hydropower, thermal power, wind power, and solar power plants, but are also widely used in electric vehicles such as electric bicycles, electric motorcycles, and electric cars, as well as in various fields including military equipment and aerospace. With continuous expansion of an application field of the power batteries, demands in the market of the power batteries are also continuously expanded.

During charging and discharging of actual application, a battery cannot completely convert chemical energy and electric energy, and a part of the chemical energy and the electric energy are converted into thermal energy. An uncontrollable abnormal change of a temperature of the battery may also be referred to as thermal runaway. When the thermal runaway occurs, a cooling plate may leak inside the battery, causing failure of the cooling plate.

To protect the cooling plate to improve a problem of failure of the cooling plate when the thermal runaway occurs in the battery, an embodiment of the present application provides a battery module. In the battery module, the cooling plate is arranged between two neighboring battery cells. A protective member is arranged above the cooling plate, to protect the cooling plate and reduce a probability that the thermal runaway spreads to the cooling plate and causes failure of the cooling plate.

The battery module disclosed in this embodiment of the present application may be used in, but is not limited to, an electrical device such as a vehicle, a ship, or an aircraft. A power supply system of the electrical device formed by the battery module and the like disclosed in the present application may be used.

An embodiment of the present application provides an electrical device using a battery as a power supply. The electrical device may be, but is not limited to, a mobile phone, a tablet computer, a notebook computer, an electric toy, an electric tool, a power car, an electric automobile, a ship, a spacecraft, and the like. The electric toy may include a fixed or mobile electric toy, for example, a game console, an electric car toy, an electric ship toy, and an electric airplane toy. The spacecraft may include an airplane, a rocket, a shuttle, a spacecraft, and the like.

For ease of description, the following embodiment is described by using an example in which an electrical device according to an embodiment of the present application is a vehicle 1000.

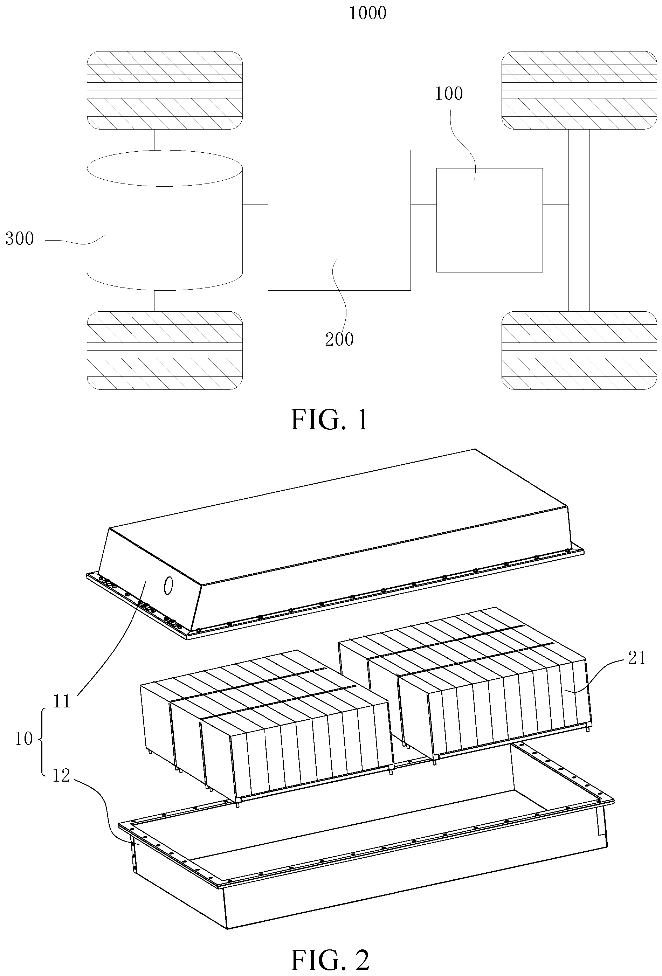

Refer to FIG. 1. FIG. 1 is a schematic diagram of a structure of a vehicle 1000 according to some embodiments of the present application. The vehicle 1000 may be a fueled automobile, a gas automobile, or a new energy automobile. The new energy automobile may be an all-electric automobile, a hybrid electric automobile, an added-program automobile, or the like. A battery 100 is arranged inside the vehicle 1000. The battery 100 may be arranged at a bottom portion, a head portion, or a tail portion of the vehicle 1000. The battery 100 may be configured to supply power to the vehicle 1000. For example, the battery 100 may be used as an operation power supply of the vehicle 1000. The vehicle 1000 may further include a controller 200 and a motor 300. The controller 200 is configured to control the battery 100 to supply power to the motor 300, for example, for working electricity requirements during startup, navigation, and driving of the vehicle 1000.

In some embodiments of the present application, the battery 100 may be not only used as the operation power supply of the vehicle 1000, but also used as a driving power supply of the vehicle 1000, and replace or partially replace fuel or natural gas to provide driving power for the vehicle 1000.

Refer to FIG. 2. FIG. 2 is an exploded view of a battery 100 according to some embodiments of the present application. The battery 100 includes a box body 10 and a battery module 20. The battery module 20 generally includes an electrical connection member 25 and a plurality of battery cells 21 connected in series or parallel. The battery cells 21 are accommodated in the box body 10. The box body 10 is configured to provide an accommodating space for the battery cells 21, and the box body 10 may use a plurality of structures. In some embodiments, the box body 10 may include a first component 11 and a second component 12. The first component 11 and the second component 12 cover each other, and the first component 11 and the second component 12 jointly define the accommodating space for accommodating the battery cells 21. The second component 12 may be a hollow structure with an opening at one end. The first component 11 may be a plate-shaped structure. The first component 11 covers an opening side of the second component 12, so that the first component 11 and the second component 12 jointly define the accommodating space. Both the first component 11 and the second component 12 may alternatively be hollow structures with an opening at one end, and an opening side of the first component 11 covers an opening side of the second component 12. Definitely, the box body 10 formed by the first component 11 and the second component 12 may have a plurality of shapes, such as a cylinder or a cuboid.

In the battery 100, there may be a plurality of battery cells 21, and the plurality of battery cells 21 may be connected in series, parallel, or hybrid. The hybrid means that the plurality of battery cells 21 are connected in series and parallel. The plurality of battery cells 21 may be directly connected in series, parallel, or hybrid together, and then an integrity formed by the plurality of battery cells 21 is accommodated in the box body 10. Definitely, the battery 100 may alternatively be in a form of the plurality of battery cells 21 first connected in series, parallel, or hybrid forming a battery module. Then, a plurality of battery modules are connected in series, parallel, or hybrid to form an integrity and accommodated in the box body 10. The battery 100 may further include another structure. For example, the battery 100 may further include a bus component, configured to implement an electrical connection between the plurality of battery cells 21.

Each battery cell 21 may be a secondary cell or a primary cell; or may be a lithium-sulfur cell, a Na-ion cell, or a Mn-ion cell, but is not limited thereto. The battery cell 21 may be a cylinder, a flat body, a cuboid, or another shape.

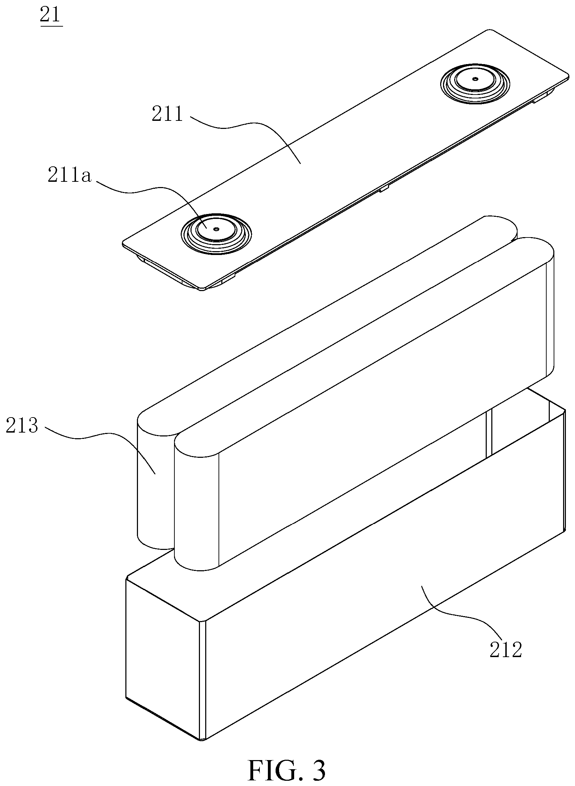

Refer to FIG. 3. FIG. 3 is a schematic diagram of a disassembled structure of a battery cell 21 according to some embodiments of the present application. The battery cell 21 refers to a smallest unit forming a battery. As shown in FIG. 3, the battery cell 21 includes an end cover 211, a housing 212, a battery cell assembly 213, and other functional components.

The end cover 211 refers to a component that covers an opening of the housing 212 to isolate an internal environment of the battery cell 21 from an external environment. Without limitation, a shape of the end cover 211 may be adapted to a shape of the housing 212 to match the housing 212. Optionally, the end cover 211 may be made of a material (for example, an aluminum alloy) having a certain hardness and strength. In this way, the end cover 211 is not easy to be deformed when being crushed and collided, so that the battery cell 21 can have a higher structural strength and can also have improved safety performance. The end cover 211 may be provided with a functional component such as an electrode terminal 211a. The electrode terminal 211a may be configured to be electrically connected to the battery cell assembly 213, to output or input electrical energy of the battery cell 21. In some embodiments, the end cover 211 may further be provided with a pressure-releasing mechanism configured to release an internal pressure when the internal pressure or a temperature of the battery cell 21 reaches a threshold. The end cover 211 may also be made of various materials, for example, copper, iron, aluminum, stainless steel, aluminum alloy, and plastic. This is not specifically limited in the embodiments of the present application. In some embodiments, an inner side of the end cover 211 may further be provided with an insulating member, and the insulating member may be configured to isolate electrical connection components inside the housing 212 and the end cover 211, to reduce a risk of a short circuit. For example, the insulating member may be plastic, rubber, or the like.

The housing 212 is an assembly configured to cooperate with the end cover 211 to form the internal environment of the battery cell 21. The formed internal environment may be configured to accommodate the battery cell assembly 213, an electrolyte, and other components. The housing 212 and the end cover 211 may be independent components. An opening may be provided on the housing 212, and the end cover 211 covers the opening at the opening to form the internal environment of the battery cell 21. Without limitation, the end cover 211 and the housing 212 may alternatively be integrated. Specifically, the end cover 211 and the housing 212 may first form a common connection surface before other components enter the housing. When the inside of the housi10ng 212 needs to be encapsulated, the end cover 211 then covers the housing 212. The housing 212 may have various shapes and various sizes, for example, a cuboid, a cylinder, or a hexadecagon. Specifically, the shape of the housing 212 may be determined according to a specific shape and size of the battery cell assembly 213. The housing 212 may be made of various materials, for example, copper, iron, aluminum, stainless steel, aluminum alloy, or plastic. This is not specifically limited in the embodiments of the present application.

The battery cell assembly 213 is a component that is in the battery cell 21 and that undergoes an electro-chemical reaction. The housing 212 may include one or more battery cell assemblies 213. The battery cell assembly 213 is primarily formed by winding or stacking a positive electrode sheet and a negative electrode sheet, and a separator is generally arranged between the positive electrode sheet and the negative electrode sheet. Parts of the positive electrode sheet and the negative electrode sheet that have an active material form a main portion of the battery cell, and parts of the positive electrode sheet and the negative electrode sheet that do not have an active material respectively form a tab. The positive tab and the negative tab may be located together at one end of the main portion, or separately at two ends of the main portion. During charging and discharging of the battery, the positive active material and the negative active material react with the electrolyte, and the tab is connected to the electrode terminal to form a current loop.

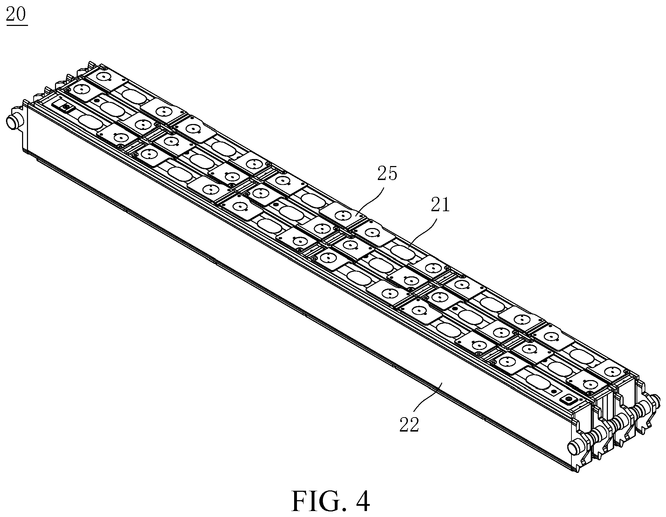

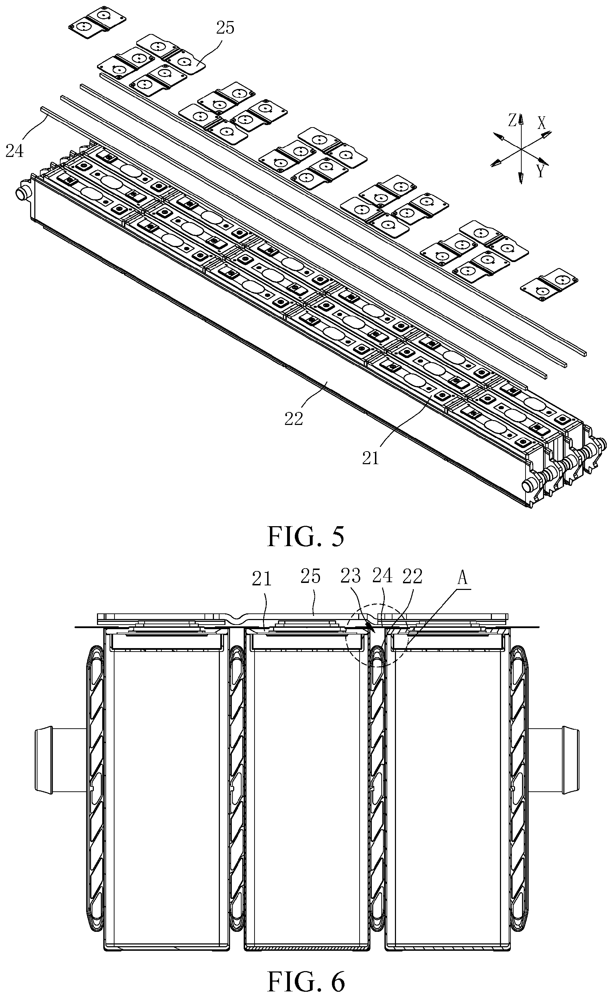

Refer to FIG. 4 and FIG. 5. Some embodiments of the present application provide a battery module 20. The battery module 20 includes battery cells 21, a cooling plate 22, and a protective member 24. The battery cells 21 are arranged at intervals along a first direction X. The cooling plate 22 is arranged between two neighboring battery cells 21 along the first direction X. The two neighboring battery cells 21 and at least one side of an outer periphery of the cooling plate 22 located between the two neighboring battery cells 21 jointly form an accommodating space 23. The protective member 24 at least covers the at least one side of the cooling plate 22 that forms the accommodating space 23.

The accommodating space 23 may be formed between at least one side of an outer periphery of each cooling plate 22 and two neighboring battery cells 21. For example, along a third direction Z, the accommodating space 23 may be respectively formed between two opposite sides of the outer periphery of each cooling plate 22 and the two neighboring battery cells 21. Alternatively, the accommodating space 23 may be formed between two opposite sides of the outer periphery of each cooling plate 22 and the two neighboring battery cells 21. The third direction Z, the first direction X, and a second direction Y intersect with each other.

The cooling plate 22 is configured to remove heat from the battery cell 21 during operation of the battery cell 21, thereby cooling the battery cell 21 and protecting the cooling plate 22. The cooling plate 22 may be, but is not limited to, a water cold plate. The cooling plate 22 may be arranged in the accommodating space 23 or the cooling plate 22 covers the accommodating space 23, to block an end surface of the cooling plate 22 from being in direct contact with the outside through the accommodating space 23.

The protective member 24 may be, but is not limited to, an elongated structure shown in FIG. 5, and may be adjusted according to an actual situation.

For example, as shown in FIG. 5, the plurality of battery cells 21 may be arranged at intervals along the first direction X, and two neighboring battery cells 21 are arranged closely together along the second direction Y perpendicular to the first direction X. In other words, along the second direction Y, the plurality of battery cells 21 may jointly form an elongated battery cell 21 group. A cooling plate 22 is arranged between each elongated battery cell 21 group along the first direction X, and each cooling plate 22 can cool battery cell 21 surfaces that are of two neighboring battery cell 21 groups and that are disposed opposite. The accommodating space 23 may be formed between the two opposite sides of the outer periphery of each cooling plate 22 and the two neighboring battery cells 21, and the protective member 24 may cover the accommodating space 23.

Since the protective member 24 can prevent the cooling plate 22 from directly contacting an external environment through the accommodating space 23, when the battery cell 21 undergoes thermal runaway, the protective member 24 can block gases or particles generated during the thermal runaway of the battery cell 21, and reduce a probability that the gases or particles enter the accommodating space 23 to affect the cooling plate 22 and cause damage or even failure of the cooling plate 22, thereby effectively protecting the cooling plate 22.

In addition, during assembly of the battery module 20, the protective member 24 can also protect the cooling plate 22, to reduce a probability that the particles or other impurities enter the accommodating space 23 and cause damage or even failure of the cooling plate 22.

As shown in FIG. 6, in some embodiments, the accommodating space 23 is formed with an opening on a side thereof away from the cooling plate 22. The protective member 24 covers the opening.

The foregoing opening may be understood as a channel through which external impurities such as particles enter the accommodating space 23. The protective member 24 is used to cover the opening, so that a path of the particles entering the accommodating space 23 can be blocked. In addition, compared to protecting the entire cooling plate 22, the protective member 24 is only set to cover the opening, so that a quantity of used protective members 24 can be reduced, thereby lowering production costs of the battery module 20.

In some embodiments, the protective member 24 includes a protective film, the protective film is arranged over the opening, and the protective film covers the opening. Alternatively, the protective member 24 includes a protective plate, and two opposite ends of the protective plate are respectively connected to end surfaces of the two neighboring battery cells 21, to cover the opening.

In other words, the protective member 24 can include different components to cover the opening. One type is to cover the opening by using the protective film, and the other type is to cover the opening by using the protective plate.

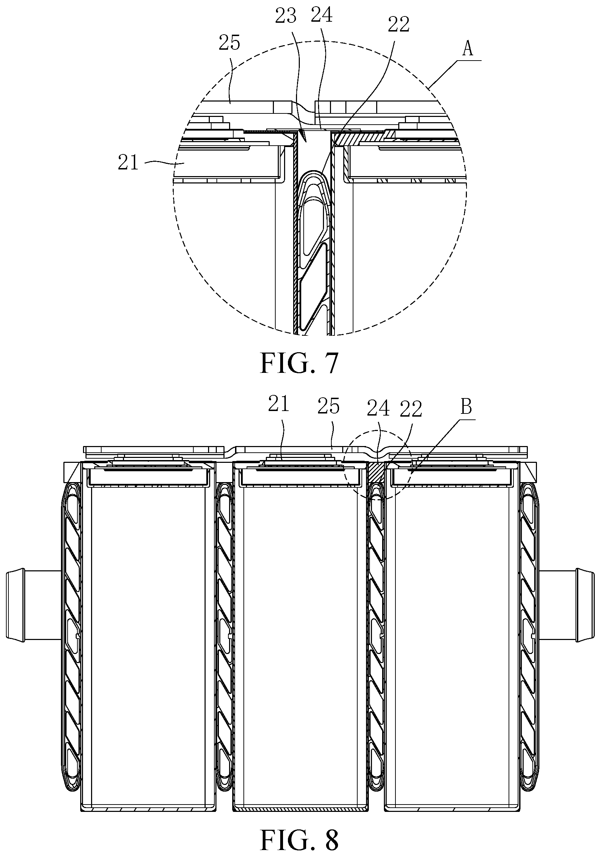

For example, as shown in FIG. 7, when the protective member 24 includes the protective film, the protective film may be adhered to surfaces of the two neighboring battery cells 21 or adhered to a side wall of the accommodating space 23, to cover the opening.

When the protective member 24 includes the protective plate (not shown in the figure), a connection manner between the two ends of the protective plate and the end surfaces of the two neighboring battery cells 21 may be a fixed or detachable connection. For example, the protective plate may be, but is not limited to, adhered or clipped to the two neighboring battery cells 21.

This arrangement enriches types of components that the protective member 24 can include, simplifies a difficulty of manufacturing the protective member 24, and expands an applicable environment of the protective member 24.

In some embodiments, the protective member 24 includes a high temperature resistant member.

For example, when the protective member 24 includes the high temperature resistant member, if the battery cell 21 undergoes the thermal runaway, when a large amount of heat generated by the battery cell is transferred to a vicinity of the cooling plate 22, the protective member 24 can effectively block the heat and reduce a probability that the cooling plate 22 leaks under an action of a high temperature due to direct contact with the large amount of heat.

In some embodiments, the protective member 24 includes foam.

When the protective member 24 is made of the foam, since the foam has excellent sealing properties and resistance to compression deformation, and is suitable for various temperature environments, not only the probability that the particles and other impurities pass through the protective member 24 and enter the accommodating space 23 can be reduced, but also a service life of the protective member 24 can be extended.

In some embodiments, the protective member 24 includes a first portion and a second portion, the first portion is connected to the battery cell 21, the second portion covers the opening of the accommodating space 23, and a strength of the second portion is greater than a strength of the first portion.

A side of the second portion that faces the opening and a side of the second portion that faces away from the opening are both in a suspended state, and a side of the first portion is in contact with the battery cell 21. Therefore, the first portion can be supported by the battery cell 21, and the second portion has no component supporting the second portion. If a large quantity of particles are accumulated on the second portion, and the second portion has no component supporting the second portion, the second portion may collapse or even crack.

Therefore, the strength of the second portion is set to be greater than the strength of the first portion, so that not only a use range of the second portion can be increased, but also a service life of the second portion can be extended.

As shown in FIG. 8, in some embodiments, the protective member 24 is inserted into the accommodating space 23, and the protective member 24 is in contact with the cooling plate 22.

For example, when the protective member 24 is in a gel state and is inserted into the accommodating space 23, the protective member 24 occupies less space in the battery module 20 while protecting the cooling plate 22, thereby reducing an overall volume of the battery module 20.

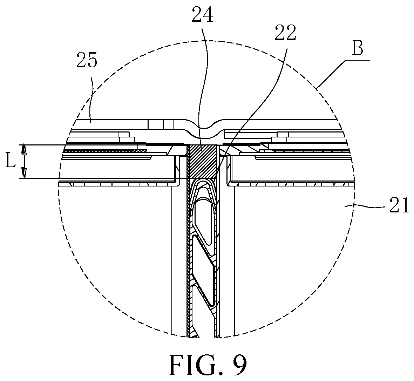

Specifically, as shown in FIG. 9, in some embodiments, the protective member 24 includes a first end and a second end that are arranged opposite to each other, the first end is in contact with the cooling plate 22, a distance between the second end and the cooling plate 22 is defined as L, and 0 millimeters (mm) < L < 3 millimeters (mm). A specific value of L may be 1 mm, 1.5 mm, 1.8 mm, 2 mm, 2.7 mm, 3 mm, or any value between two adjacent values.

The second end of the protective member 24 generally does not protrude from a surface of the battery cell 21. Therefore, a thickness of the protective member 24 can be reduced as much as possible without affecting a function of the protective member 24, and a probability that the protective member 24 does not interfere with other components in the battery module 20 can be reduced.

In some embodiments, the protective member 24 includes an insulating adhesive.

For example, the protective member 24 may be a silicone adhesive. The silicone adhesive is a material similar to an ointment that rapidly cures upon exposure to moisture in the air and forms a tough and rubber-like solid. The silicon adhesive has a relatively strong cohesive force, a relatively large stretching strength, weather resistance, and the like.

This arrangement can not only reduce a difficulty of obtaining the protective member 24, but also improve a connection stability between the protective member 24 and the accommodating space 23, thereby improving a protective effect of the protective member 24 on the cooling plate 22.

As shown in FIG. 4 and FIG. 5, in some embodiments, the battery module 20 further includes an electrical connection member 25, the electrical connection member 25 is located on one side of the battery cell 21, and the electrical connection member 25 is electrically connected to the two neighboring battery cells 21. The protective member 24 is located between the electrical connection member 25 and the battery cell 21, and the protective member 24 is spaced apart from the electrical connection member 25.

The electrical connection member 25 may be, but is not limited to, a bar chip. The bar chip may be configured to electrically connect the two neighboring battery cells 21 and perform an operation such as current distribution on the battery cells 21.

Since the protective member 24 is arranged on a side on which the electrical connection member 25 is located, and the protective member 24 is made of an insulating material, an electrical clearance and a creepage distance in this case can be appropriately increased, thereby improving electrical safety.

The present application further provides a battery. The battery includes the battery module 20 according to any of the foregoing embodiments. For related content of the battery module 20, refer to the content recorded above, and details are not described herein again.

Since the protective member 24 of the battery can prevent the cooling plate 22 from directly contacting an external environment through the accommodating space 23, when the battery cell 21 undergoes thermal runaway, the protective member 24 can block gases or particles generated during the thermal runaway of the battery cell 21, and reduce a probability that the gases or particles enter the accommodating space 23 to affect the cooling plate 22 and cause damage or even failure of the cooling plate 22, thereby effectively protecting the cooling plate 22.

In addition, during assembly of the battery module 20, the protective member 24 can also protect the cooling plate 22, to reduce a probability that the particles or other impurities enter the accommodating space 23 and cause damage or even failure of the cooling plate 22.

In addition, the present application further provides an electrical device. The electrical device includes the battery according to any of the foregoing embodiments. For related content of the electrical device, refer to the content recorded above, and details are not described herein again.

Since the protective member 24 of the electrical device can prevent the cooling plate 22 from directly contacting an external environment through the accommodating space 23, when the battery cell 21 undergoes thermal runaway, the protective member 24 can block gases or particles generated during the thermal runaway of the battery cell 21, and reduce a probability that the gases or particles enter the accommodating space 23 to affect the cooling plate 22 and cause damage or even failure of the cooling plate 22, thereby effectively protecting the cooling plate 22.

In addition, during assembly of the battery module 20, the protective member 24 can also protect the cooling plate 22, to reduce a probability that the particles or other impurities enter the accommodating space 23 and cause damage or even failure of the cooling plate 22.

As shown in FIG. 5, specifically, in an embodiment, the battery module 20 includes a plurality of battery cells 21 arranged at intervals along a first direction X. Along a second direction Y, the plurality of battery cells 21 may jointly form an elongated battery cell 21 group. A cooling plate 22 is arranged between each elongated battery cell 21 group. Along a third direction, an accommodating space 23 may be formed between two opposite sides of an outer periphery of each cooling plate 22 and two neighboring battery cells 21. The accommodating space 23 is formed with an opening on a side thereof away from the cooling plate 22. The protective member 24 covers the opening.

When the battery cell 21 undergoes thermal runaway, the protective member 24 can block gases or particles generated during the thermal runaway of the battery cell 21, and reduce a probability that the gases or particles enter the accommodating space 23 to affect the cooling plate 22 and cause damage or even failure of the cooling plate 22, thereby effectively protecting the cooling plate 22.

In addition, during assembly of the battery module 20, the protective member 24 can also protect the cooling plate 22, to reduce a probability that the particles or other impurities enter the accommodating space 23 and cause damage or even failure of the cooling plate 22.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments merely describe several implementations of the present application. The descriptions are relatively specific and detailed, but is not to be understood as limitations to the scope of the present application. For a person of ordinary skill in the art, several transformations and improvements may be made without departing from the idea of the present application. These transformations and improvements fall within the protection scope of the present application. Therefore, the protection scope of the patent of the present application shall be subject to the appended claims.

## Claims

1. A battery module, comprising:
battery cells, arranged at intervals along a first direction;
a cooling plate, arranged between two neighboring battery cells along the first direction, wherein the two neighboring battery cells and at least one side of an outer periphery of the cooling plate located between the two neighboring battery cells jointly form an accommodating space; and
a protective member, at least covering the at least one side of the cooling plate that forms the accommodating space.

2. The battery module according to claim 1, wherein the accommodating space is formed with an opening on a side thereof away from the cooling plate; and the protective member covers the opening.

3. The battery module according to claim 2, wherein the protective member comprises a protective film, the protective film is arranged over the opening, and the protective film covers the opening.

4. The battery module according to claim 2, wherein the protective member comprises a protective plate, two opposite ends of the protective plate are respectively connected to end surfaces of the two neighboring battery cells, and the protective plate covers the opening.

5. The battery module according to any one of claims 1 to 4, wherein the protective member comprises a high temperature resistant member.

6. The battery module according to any one of claims 1 to 5, wherein the protective member comprises foam.

7. The battery module according to any one of claims 2 to 6, wherein the protective member comprises a first portion and a second portion, the first portion is connected to the battery cell, the second portion covers the opening of the accommodating space, and a strength of the second portion is greater than a strength of the first portion.

8. The battery module according to any one of claims 1 to 7, wherein the protective member is inserted into the accommodating space, and the protective member is in contact with the cooling plate.

9. The battery module according to any one of claims 1 to 8, wherein the protective member comprises a first end and a second end that are arranged opposite to each other, the first end is in contact with the cooling plate, a distance between the second end and the cooling plate is defined as L, and 0 mm < L < 3 mm.

10. The battery module according to any one of claims 1 to 9, wherein the protective member comprises an insulating adhesive.

11. The battery module according to any one of claims 1 to 10, wherein the battery module further comprises an electrical connection member, the electrical connection member is located on one side of the battery cell, and the electrical connection member is electrically connected to the two neighboring battery cells; and
the protective member is located between the electrical connection member and the battery cell, and the protective member is spaced apart from the electrical connection member.

12. A battery, comprising the battery module according to any one of claims 1 to 11.

13. An electrical device, comprising the battery according to claim 12.
